# EUROPEAN PATENT APPLICATION

(11) **EP 3 527 069 A1**
(43) Date of publication of application: **21.08.2019**
(21) Application number: 17860411.2
(22) Date of filing: 17.08.2017
(51) Int. Cl.: A01K 61/00

(54) **DEVICE FOR CONFINING LARVAE AND/OR AQUATIC ORGANISMS, SYSTEM, METHOD FOR KEEPING AND CULTIVATING THEM IN AQUATIC ENVIRONMENTS**

(30) Priority: 14.10.2016 CL 20162627
(71) Applicant: Universidad de Antofagasta, Antofagasta (CL)
(72) Inventor: VALENZUELA PICON, Fernando, Antofagasta (CL); GARCIA BARTOLOMEI, Enzo, Antofagasta (CL)
(74) Representative: Isern Patentes y Marcas S.L.
(86) International application number: PCT/CL2017/050041
(87) International publication number: WO 2018/068158

(57) **Abstract**

This invention relates to a confinement device for growing larvae or aquatic organisms in general, which allows the diversification of aquaculture. The device is modular and stackable. This invention relates particularly to a confinement device that makes it possible to keep larvae from multiple marine/aquatic organisms in confinement in their natural environment for them to undergo metamorphosis, maturation and settling of larvae that will subsequently become juveniles or seed for an industrial pre-fattening stage. The device also allows confining aquatic organisms in general, facilitating their development in culture. This invention also relates to a cultivation system and method comprising the use of said confinement device.

## Description

### FIELD OF THE INVENTION

The present invention relates to a containment device for larval or aquatic organisms in general, which allow the diversification of aquaculture farming. The device is linkable and stackable. In particular, the present invention relates to a containment device which keeps larvae multiple marine/aquatic organisms in condition of confinement in their natural environment, in order to develop the process of metamorphosis, maturation and settlement of larvae subsequently, they will become seed stage juvenile or industrial pre-fattening. The device also allows the confinement of aquatic organisms in general, facilitating their development in culture. The present invention also relates to a system and method of culture comprising the use of such containment device.

### BACKGROUND OF THE INVENTION

The main problem facing the aquaculture industry worldwide in the search for diversification, corresponds to the management stage of larval breeding of many species that do not yet have developed technology for management (for example, octopus, lobster, crab, etc.) as it mainly to develop such technology it requires a large investment of resources and years of dedication, coupled with a highly qualified team therefore difficult and slow to develop. Moreover, ignorance due to lack of information and technology, essential nutritional aspects for the development of the species of interest in their larval stages increases the complexity of this gap.

Larval rearing of aquatic organisms has traditionally been developed using aquariums from small and simple to modern and complex laboratories of all types and size. More specifically, in Aquaculture Industry, this step is carried out in laboratories called "Hatcherys", which focus on the reproduction of parental for obtaining the larval offspring, and carried out from this point larval rearing. In order to develop a management technique in laboratory only 1 crop species is generally spend between 10 to 20 years of research. In that period spending on resources and energy it is very high and the management of laboratories is extremely complex, requiring qualified personnel. Despite the high investment for an "hatchery", these are not capable of delivering 100% diets appropriate, because it is very difficult to replicate the diversity of items that prey larvae obtained naturally in an oceanic environment.

Larval rearing is then complicated and expensive because basically simply can not be fed properly. The growing larvae feed is expensive, technically complicated and nutritionally deficient and that the development of systems of massive and profitable crop, has not been achieved.

To cope with the high demand for high quality protein food, aquaculture seeks to diversify the types of crops that develops. Being cultivation of aquatic organism larval stage, the main problem to face, regardless of species (fish, crustaceans, molluscs, etc.), whose cultivation is seeking to develop. In general aquatic larval stage, they are kept in confined systems artificial feeding in a highly inefficient process, complex, time-consuming and resource spaces, making it impossible to bring the process of growing to a scale industrial exploitation.

In general, in the prior art experimental laboratories type "Hatchery" for feeding larvae, for example, through feeding devices are proposed (see for example, USNo.9.1 13615 B1) or confinement systems specially designed for the provision of larvae and juveniles of a certain species. As an example may be mentioned baskets fattening growing oysters are made of injected plastic, see Figure 15.

For some types of larvae, has developed the art of natural collection of seeds or post larvae, which is accomplished using various collecting elements consisting substrates generally fibrous (as large brushes or skeins) that offer a good alternative shelter and settlement for larvae found drifting in the water column. This technique is widely used for invertebrates such as mussels (mussels) and scallops (oysters), however it is inefficient to meet market demand. Due to the natural larval dispersal in the environment, use large areas of collectors, thereby providing for further support infrastructure sea.

Although there is no prior art that addresses the confinement of larval between patent documents more related may signal the US8033250 patent relates to a system of marine habitat comprising one or more assembled units, each consisting of a floating element and a plurality of levels which are fixed to the floating element and spaced below this. Levels habitat are composed of a set of racks having a section that is filled with a matrix plastic fiber mesh which is an ideal environment for various sea creatures thrive juvenile desirable (crabs, lobsters, oysters, etc.). The simulated system has roots that projected upward, provide additional anchorage areas where marine life can join.

JP2003052274 discloses a device ecological/organic box able to keep as close as possible to the ecology, while cultivating the environment periphytic fish and crustaceans. Organic matrix box has a perforated netlike, at the bottom, for adhesion of abalone or the like, and a cover having openings allowing ingress of air from outside. The device allows the preservation of aquatic life by actively containing increasing the amount of dissolved oxygen in the water contained therein. The present invention relates to a device larval constraint allowing growing multiple aquaculture species. Thus, the device keeps contained in natural bodies of water, larval and post larval cultures multiple stages aquaculture species. Especially, the cultivation of new species of high value and repopulation of overexploited. Alternatively and optionally, the device can also be used to contend juvenile organisms, including adults, various species.

The present invention relates to a containment device which keeps larvae multiple marine / aquatic organisms in condition of confinement in their natural environment, in order to develop the growth process, Metamorphosis and settlement of larvae subsequently converted in juveniles or seed stage of industrial pre-fattening.

The present invention thus teaches a containment device takes larvae natural habitat rather than trying to replicate inefficiently in a laboratory conditions. In doing so, it allows the larva to feed naturally without extra costs for natural food source using the ocean as an ecosystem service.

The present invention also relates to a system and method comprising confining the use of the aforementioned device.

### BRIEF DESCRIPTION OF THE INVENTION

This containment device for pelagic larvae or aquatic organisms of commercial interest for use in the aquaculture industry or research purposes, can be directly installed in a body of open water such as lakes or the sea, directly into the natural habitat organisms of particular interest to the industry and scientists.

The present invention thus provides a containment device which allows proper maintenance of the physico-chemical water body conditions because the design of the device allows to maintain proper conditions of shelter from predators, light and water circulation, avoiding dead zones water flow, thanks to the wide screen windows arrangement allowing movement of water and nutrient transport.

This containment device keeps larvae multiple marine/aquatic organisms (such as octopus, lobsters, crabs, etc.) and/or zooplankton in condition of confinement in their natural environment, in order to develop the process of growth, metamorphosis and settlement of larvae subsequently become seed stage juvenile or industrial pre-fattening. The device also allows the confinement of aquatic organisms in general, facilitating their development in culture.

This containment device to be able to have both larvae and live organisms of different species, in their natural environment, may also allow to determine the effect that toxic chemicals have on aquatic environments. This because the present containment device keeps living organisms in their natural environment, and thus enables verification in situ effect a given body of water or effluent (for example, discharge liquid industrial waste) has on the biology of the organism . Then, the design of this containment device comprising among other elements, interchangeable meshes and ideal for in situ multiple bodies within programs ecotoxicological monitoring of water bodies such as rivers, lakes and/or seas arrangement.

This containment device is assembled by clamping means clamping and - screwless assembly time and is easy to store and manipulate both inside and outside the water. This containment device can also be stacked and placed in series, either in a horizontal and vertical format, and once installed forms a series connected by ropes, buoys and mooring lines, in a practical and inexpensive. This restraining device can be constructed of a material selected polyethylene polymer (PE), vinyl polychloride (PVC), polypropylene (PP) or derivatives thereof. In particular, the material is selected high density polyethylene polymer (HDPE) Injected. Resistant material with lower density that water provides a slightly positive buoyancy easily handled in both seawater and fresh water.

This containment device may be equipped optionally, a member allowing inspection easily add a source of exogenous supply, and thus supplement the natural diet that may contain.

### BRIEF DESCRIPTION OF FIGURES

**Figures 1A and 1** **B:** Illustrate a system "Long Lines". Figure 1A shows different types of crops ongrowing, none of them is for larvae. Figure 1B shows the present confinement system arranged on a "Long Line" system.
**Figure 2** shows an overview of this containment system which affords conformationally one assembled structure sturdy appearance, work for high performance and durability. The front and side windows (in gray) correspond to plastic netting that may be required in various steps of opening or mesh size from 350 microns (0.35 mm) to 2000 microns (2.0 mm).
**Figure** 3 shows a stackable arrangement of the present device.
**Figure 4** shows this device by sections.
**Figure 5****:** Shows means of wedging and fastening between preformed parts of the present device.
**Figure 6****:** Shows (internal) center support of this device.

### DETAILED DESCRIPTION OF THE INVENTION

The present invention relates to a containment device, assemblable and stackable, multispecific for larval culture or cultivation of aquatic organisms in general, and allows diversification of aquaculture.

In particular, the present invention relates to a containment device which keeps larvae multiple marine/aquatic organisms in condition of confinement in their natural environment, in order to develop the process of metamorphosis, maturation and settlement of larvae subsequently become seed stage juvenile or industrial pre-fattening. This device also allows the confinement of aquatic organisms in general, facilitating their development, in culture.

The invention also relates to a system and method of culture comprising said containment device.

Similarly, the device allows research linked to the biology of marine organisms or larvae zooplantonicos by allowing make observations of the life cycle of organisms, which otherwise could not be performed.

Instead of trying to replicate inefficiently natural conditions in a laboratory, the present device allows the larvae from developing in a natural habitat, feeding no additional cost. This device allows without difficulty entering food larva, without allowing the output thereof, which is confined inside the device.

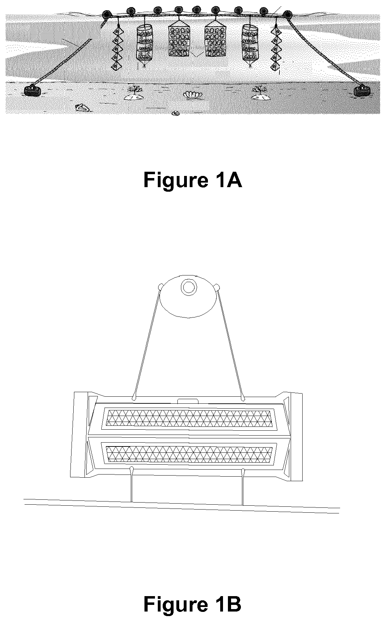

The present invention thus relates to a containment device which allows to contain and ensure the natural feeding larvae (early life stages) of various species of aquatic origin possessing both commercial value as scientific, and with contain them, allows it to be located through! use of technology "Long Lines", which are widely used worldwide for its simplicity, low cost and reliability and consisting of voltage systems string using anchorages for anchorage and buoys, allowing the provision of various elements to develop crops suspended at sea. See Figure 1A

Figures 1A and 1B show a schematic of use type "Long Lines". Figure 1A shows different types of crops ongrowing, none of them is to larvae, as the confinement system of the present invention. Figure 1B shows the present confinement system arranged on a "Long Line" system. This restraining device can be arranged horizontally as vertically stacked one upon another manner, which gives great versatility and adaptability to various aquatic environmental conditions and requirements of different species.

Particulars of this containment device are that it allows the entry of food into the surrounding natural environment where it is available, allowing larvae confined maintain natural environmental conditions. Thus, the present containment device becomes a powerful tool for researchers linked to the biology of zooplankton organisms or marine larvae, as well as for the confinement of larval transition to juveniles for systems of traditional aquaculture and development of new crop species. Also this device has a screw cap which allows entry exogenous food (live food or micropellets) for confined larvae, as well as to input a probe or instrument quickly without removing the device from the marine environment through scuba diving.

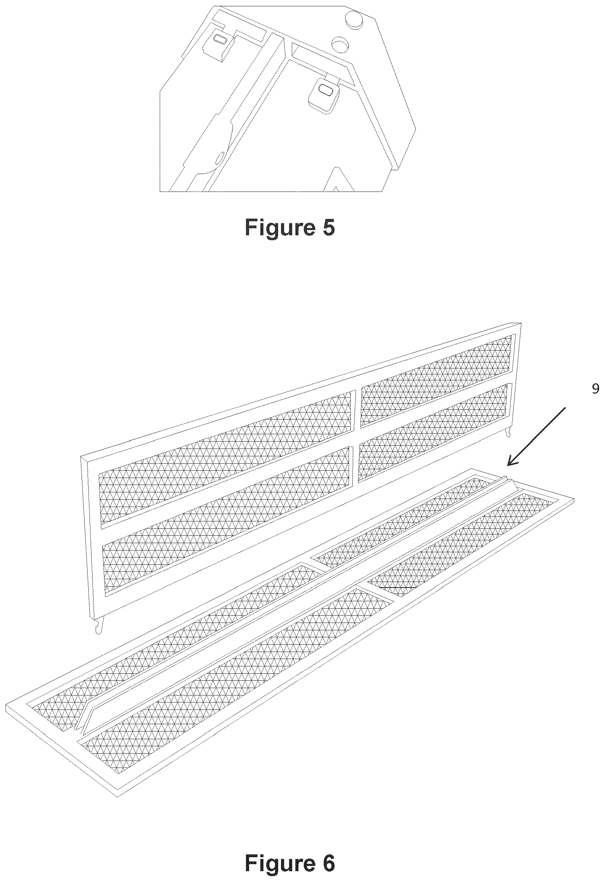

This containment device has a body prismatic hexagonal perimeter and a series of side windows and designed so that they can be assembled with mesh opening or light to the user definition. This set of windows in turn allows the entry of surrounding food, which can be supplemented with the addition of a medium into mesh holder. This medium holder mesh separates the internal physical device space bottom or decantation zone particulate allowing the larvae of interest within the present device can prevent positioned on the bottom where protozoa and decomposers prevail, acting as a double bottom. See Figure 6.

This restraining device can be constructed of material of high density polyethylene (HDPE) injected. Resistant material with lower density that water provides a slightly positive buoyancy easily handled in both seawater and fresh water.

The windows of this device (front, rear, upper side and lower side) which are fused with the HDPE material have selected mesh nylon meshes, stainless steel, natural fibers or the like, with openings of size between 350 microns and up to 2 mm, preferably.

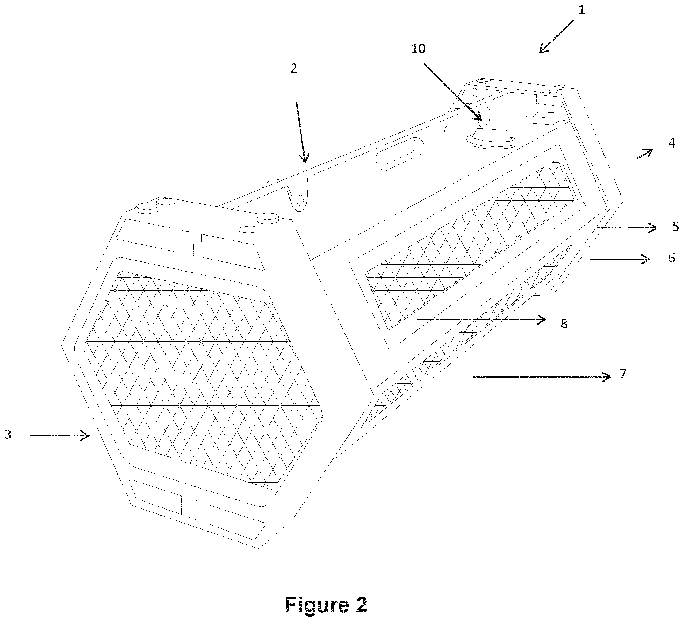

Figure 2 shows an overview of this containment device which affords conformationally one assemblable structure, sturdy appearance, work for high performance and durability. The front and side windows (in gray) correspond to plastic netting that may be required in various steps of opening or mesh size from 350 microns (0.35 mm) to 2000 microns (2.0 mm). This allows keeping different crop species, and different stages of growth of the particular species. Windows or screens are interchangeable so to grant the maintainability quickly, and to adapt the device as required.

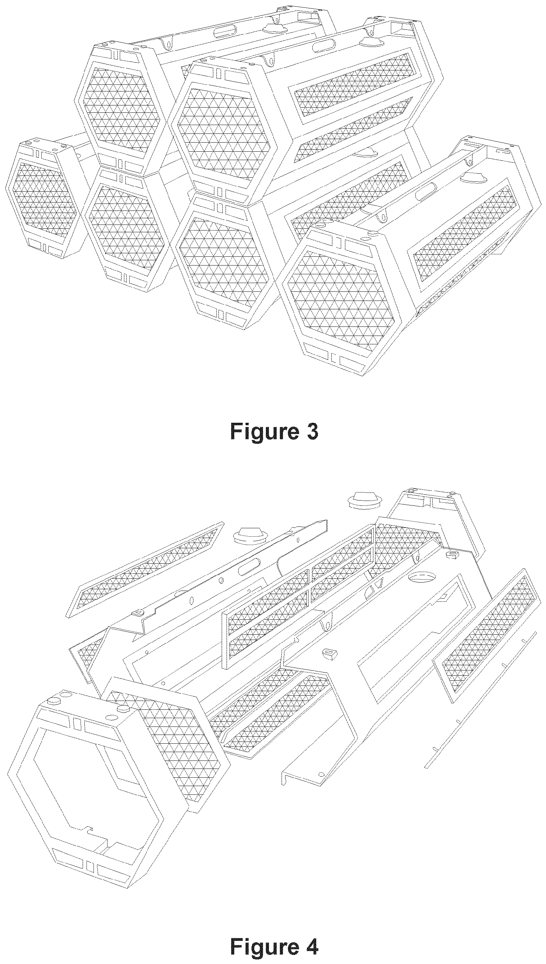

Figure 3 shows a set of devices stacked manner. The design allows them to be safely accumulated or stored easily thanks to a system fit between devices when overlap or rest each other.

Figure 4 shows an exploded view of this containment system. Producing symmetrical parts allows for the manufacture of the device only 7 templates or molds for plastic injection, preferably HDPE required. Also, this allows the cutting device packaging for commercialization, space-saving and thus be able to put many more devices on a container.

Figure 5 shows wedging and fastening between preformed parts of this containment system. This system was designed to withstand harsh conditions of use and handling.

Figure 6 shows (internal) center supports this confinement system. This central system shown here is a particular embodiment. However, the central supports may vary depending on the species to be cultured so as to not only attract food, but also provide shelter and characteristics inherent in the developmental habitat of different species that can be grown in this device. A base plate (Horizontal) will in turn, separating larvae particulate organic material naturally decant to the bottom of the device, allowing separate environment that is created in the double bottom, where other decomposers perform their function, thus avoiding having our larvae in direct contact with these decomposers.

Applying cultivation of aquatic species for the present device was made considering the commercial interests of Chilean benthic cephalopods, is focused mainly on octopus Octopus mimus, after the gastropod Muricidae "Loco" Concholepas conchonlepas, is the most important resource the artisanal fisheries in northern Chile. Octopus mimus is an opportunistic and capable of adopting various predatory behaviors that allow you to access a wide variety of prey species, which increases its potential in aquaculture (Zúñiga, O., Olivares Paz, A., & Torres, I. (2011). growth Assessment mimus common octopus octopus northern Chile fed diets formulated. Latin American Journal of Aquatic Research, 39 (3), 584-592). However, larviculture represents, at present, the limiting factor for the commercial cultivation of this species factor. The impossibility of juveniles from culture implies that any initiative fattening required stocking caught per fishing, which sometimes can be harmful according to the extraction method that is performed in this species, considering that copies must capture with the utmost care, avoiding damage to the body. Hence the need to design and experiment with new cropping systems for paralarvae.

The great difficulty in growing common octopus is high mortality occurring in the first phase of post-embryonic life. These individuals show a high metabolic activity and an extremely voracious eating behavior and can quickly enter starvation in the absence of food (Igarashi, MA (2010). Current situation and potential for development of octopus culture in Brazil. Scholarly journal Agricultural Sciences and Ambientals, 8 (4), 417-427). It is estimated that the period of planktonic life paralarvae is 30 to 60 days of life, depending on the water temperature and the geographical area. These organisms are active predators from the first day of life, although they have internal vitelline reserves that allow them to survive in the absence of food for a few days. Of the work in culture laboratory paralarvae of O. vulgaris it is known that as they grow older, the proportion of the arms against the mantle increases, and once reached a certain size, perform the settlement in the background, benthic juveniles becoming morphology like adults.

High larval mortality can be attributed to three factors: the non-availability of a live diet adequate in size and nutrient composition, the lack of standardization of cultivation techniques and finally the lack of knowledge of the biology of the species in these phases early, with consequent lack of their basic nutritional needs (Moxica, C, Linares, F., Otero, JJ, Iglesias, J., & Sanchez, FJ 2002. intensive culture paralarvae octopus, octopus vulgaris Cuvier, 1797, in 9 m3 tanks. Bull. Inst. Esp. Oceanogr, 18 (1 -4), 31 - 36). As shown in the study by JACUMAR, 2004. Cultivation Octopus. National Plans for Mariculture, Spain where histological examination of the digestive gland of O. vulgaris paralarvae said that high larval mortality is mainly due to nutritional causes. Dominguez, P., Cortes, G. Vazquez, CR, & Cruz Suarez, LE (2004). Food and Nutrition cephalopods: recent advances and future prospects. Advances in aquaculture nutrition VII. Memories of the VII International Aquaculture Nutrition Slmposlum. Hermoslllo, Sonora, 16-19) through analysis of stomach contents into paralarvae and freshly hatched indicated that these animals are carnivores from the starting of its life cycle; proteolytic high activity in the digestive enzymes paralarvae also indicates a high protein diet from the earliest days.

### FARMING LOCO (Concholepas choncolepas) WITH THIS DEVICE.

12 devices were arranged in the sea for growing larvae loco average size of 400 microns. Each device showed a capacity of 60 liters/device and 100 larvae/liter. The device was 200 microns mesh on the windows. Thus, a total of 6,000 larvae per device were arranged horizontally and consecutively growing on a line "long line" located 1, 5m from the sea surface, remaining there for a period of 4 weeks. Then, track which survival of the larvae contained in the devices was performed. Tracking understood withdrawal a week March 1 mode devices have replicas of each sample.

After a week, the larvae 3 devices for growth and survival counts were withdrawn. Although 100% of the larvae survived C. concholepas not, a variety of living organisms within devices, such as crustaceans, mollusks, echinoderms and annelids, survived. It is concluded that possibly crazy larvae may have been food from other species, particularly protozoan organisms.

The results show that larvae Mad, due to their shape and way of feeding in the plankton, not show ideal characteristics for the conditions developed within the devices. However, observations allow us to infer that other larvae that comply with the characteristic of high predatory marine plankton, if they should be able to survive to feed on other species that were possible to find within the systems. It is noteworthy that these results can not be considered definitive because they may differ due to seasonality, location and depth.

### FARMING LARVAL octopuses WITH THIS DEVICE

12 devices were arranged in the sea for growing larvae octopus. Each device showed a capacity of 60 liters/device and 5 larvae/liter. The device had meshes of 1000 microns in windows. Thus, a total of 30 larvae per device were arranged horizontally and consecutively growing on a line "long Line" located about 1,5 m from the sea surface, remaining there for a period of 4 weeks. Then, track which survival of the larvae contained in the devices was performed. Tracking understood the weekly retreat mode 3 devices have replicas of each sample.

After a week, the larvae 3 devices for growth and survival counts were withdrawn. In Week 1.46% of the larvae survived the device. In Week 2, 15.9% of the larvae survived the device. In week 3, 8.3% of the larvae survived the device. At week 4, there was no evaluation as a tidal wave, caused the loss of the remaining devices.

In the last week of monitoring, an average survival figure of 25 larvae per device was obtained. There was a range of 17 to 31 larvae per device. The above results show that confinement systems have ideal characteristics for the observed conditions within the devices. We conclude - without consent to this as single theoretical explanation, the larvae are highly predatory octopus, being even on top of the device observed in the food chain. Then the vast majority of organisms detected within the devices go on to become prey octopus larvae.

It is noteworthy that these results can not be considered definitive because they may differ due to seasonality, location and depth.

## Claims

1. Containment device for larval culture or body water, having a sturdy structure and prismatic hexagonal, is stackable and linkable by means of clamping and clamping is of a polymeric material selected from polyethylene (PE), polyvinyl chloride (PVC), polypropylene (PP) or derivatives thereof, including high density polyethylene (HDPE) having a density lower than water which gives the device a slightly positive buoyancy easily handled in both seawater and fresh water and comprises front, rear and side upper and lower walls, each side wall has interchangeable screen windows with opening or light, where the meshes are fused to the polymeric material and selected from one or more of a nylon mesh, metal mesh or mesh natural fiber with openings sized between 350 microns to 2,000 microns and wherein said mesh to allow entry of surrounding, and further comprising means carries mesh inside which is removable and which separates the internal physical device space bottom or decantation zone particulate material that prevents the larvae is positioned at the bottom of the device, and wherein further the device comprises a screw cap which allows food to enter exogenous including live food or micropellets, as input to a probe or instrument quickly and without removing the device from the marine environment.

2. The containment device of claim 1, keeping larvae condition confinement in their natural environment.

3. The containment device of claim 1, wherein the larva allows natural feeding from the earliest stages of life.

4. The containment device of claim 1, allowing confinement of larval transition to juveniles.

5. System engageable culture systems "long line" for larvae or aquatic organisms, comprising one or more devices according to claim 1, wherein said device is arranged in series horizontally, vertically or in both directions.

6. Method for the cultivation of aquatic organism larvae or, comprising arranging one or more devices according to claim 1 in horizontal, vertical or both form and consecutively on a cultivation line "long line" which can be located at different depths from the surface of the sea, remaining submerged for a period of time.
